# EUROPÄISCHE PATENTANMELDUNG

(11) **EP 0 924 014 A1**
(43) Veröffentlichungstag der Anmeldung: **23.06.1999**
(21) Anmeldenummer: 98123961.9
(22) Anmeldetag: 17.12.1998
(51) Int. Cl.: B23B 51/00

(54) **Bohrwerkzeug**

(30) Priorität: 22.12.1997 DE 19757242
(71) Anmelder: August Beck GmbH & Co., D-72474 Winterlingen (DE)
(72) Erfinder: Papajewski, Jörg, 72458 Albstadt (DE)
(74) Vertreter: Maser, Jochen, Dipl.-Ing.

(57) **Zusammenfassung**

Bohrwerkzeug für Bohrungen in Vollmaterial mit einem Bohrerschaft mit mindestens einer an der Stirnseite des Bohrwerkzeuges angeordneten Schneide, mit mindestens einer von der Stirnseite sich in axialer Richtung erstreckender Ausnehmung für die Spanabfuhr aus der Bohrung, wobei mindestens eine der Schneiden aus einem beschichteten Cermet-Schneidwerkstoff ausgebildet ist.

## Beschreibung

Die Erfindung betrifft ein Bohrwerkzeug für Bohrungen in Vollmaterial gemäß dem Oberbegriff des Anspruchs 1.

Es sind Bohrwerkzeuge bekannt, die einen Bohrerschaft aufweisen, mit dem das Bohrwerkzeug in einer geeigneten Aufnahme gespannt werden kann. Daran schließt sich in axialer Richtung ein Arbeitsbereich des Werkzeuges an. Im Bereich einer Stirnfläche des Werkzeuges sind folgende Varianten von Schneideinrichtungen lösbar, z. B. geschraubt oder geklemmt oder nicht lösbar, z. B. geklebt oder gelötet in geeigneten Aufnahmen befestigt:
- eine zur Bohrungsachse im wesentlichen symmetrische Schneide, welche den gesamten Durchmesser der zu fertigenden Bohrung überdeckt.
- Mindestens eine Schneide, die so angeordnet ist, daß sich die Schneidkante von der Peripherie des zu fertigenden Durchmessers bis mindestens zum Zentrum des zu fertigenden Durchmessers oder bis zu einer Querschneide erstreckt.
- Zwei oder mehr Schneiden, die unterschiedliche Geometrien aufweisen können, die so angeordnet sind, daß jede Schneidkante einen bestimmten Bereich des zu fertigenden Durchmessers abdeckt.
- Eine der zuvor genannten Anordnungen, bei der die Schneideinrichtung als auswechselbarer Schneidkopf ausgeführt ist, bei dem die gesamte Schneidengeometrie aus einem Schneidstoffrohling herausgearbeitet wird.
- eine der zuvor genannten Anordnungen, bei der die Schneideinrichtung als auswechselbarer Schneidkopf ausgeführt ist, bei dem nur der unmittelbare Schneidenbereich aus dem gewünschten Schneidstoff besteht, z. B. eingelötete Schneiden.

Wenn das Bohrwerkzeug mindestens zwei Schneiden aufweist, so sind die Schneiden radial am Umfang des Werkzeuges verteilt, wobei die Umfangswinkel-Abstände nicht gleich groß sein müssen. Weist das Bohrwerkzeug mindestens drei Schneiden auf, so können jeweils zwei oder mehr Schneiden in der gleichen radialen Position, auf unterschiedlichen Durchmesserpositionen liegen.

An den Bereich der Schneidenaufnahme schließt sich bei allen genannten Varianten mindestens eine Ausnehmung axial Richtung Werkzeugschaft an, die dazu dient, die bei der Bearbeitung entstehenden Späne aus der Bohrung heraus zu transportieren.

Diese beschriebenen Schneideinrichtungen werden aus einem pulvermetallurgisch hergestellten Hartmetallwerkstoff gefertigt. Der Hartmetallwerkstoff kann unbeschichtet sein oder zusätzlich mit einer Hartstoffschicht beschichtet werden. Der Begriff 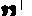 Hartmetall" beschreibt zunächst ganz allgemein eine Werkstoffgruppe, die durch hohe Härte beispielsweise größer als 1000 HV (Vickers-Härte) und metallische Eigenschaffen gekennzeichnet ist. In der spanenden Fertigung werden darunter jedoch Werkstoffe verstanden, deren Hartphase im wesentlichen aus Wolframcarbid (WC), aber auch aus anderen Karbidbildnern besteht. Damit erfolgt eine eindeutige Abgrenzung zu den 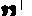 Hartmetallen", deren Hartphase im wesentlichen aus Titancarbid (TiC), aber auch anderen Karbidbildnern besteht. Diese titancarbidhaltigen 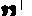 Hartmetalle" werden als 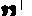 Cermet" bezeichnet.

Die Leistungsfähigkeit von Bohrprozessen wird im wesentlichen durch die Merkmale Schnittgeschwindigkeit und Vorschub, Verschleißverhalten und Bearbeitungsqualität bestimmt, die wiederum unmittelbar von den Eigenschaften der verwendeten Schneidstoffe abhängen.

Der Erfindung liegt die Aufgabe zugrunde, die Bohrungsbearbeitung in Vollmaterial deutlich zu verbessern.

Diese Aufgabe wird durch ein Bohrwerkzeug mit mindestens einer Schneide aus einem beschichteten Cermet-Schneidstoff, vorzugsweise mit einer Hartstoffschicht, ermöglicht.

Der Schneidstoff Cermet weist im Vergleich zu Hartmetall eine hohe Warmhärte sowie eine hohe Oxidationsbeständigkeit auf. Diese Eigenschaften ermöglichen bei der Feinbearbeitung, wie beispielsweise Aufbohren, Reiben, Feindrehen, Schlichtfräsen oder dergleichen, deutlich höhere Bearbeitungsgeschwindigkeiten als mit Hartmetall. Beim Reiben z. B. sind mit Cermet als Schneidstoff ca. um den Faktor 4 höhere Schnittgeschwindigkeiten möglich bei gleichzeitiger Verbesserung der Bearbeitungsqualität und der Verschleißbeständigkeit. Allerdings weist Cermet auch eine im Vergleich zu Hartmetall geringe Biegefestigkeit und Bruchzähigkeit auf. Bei der Feinbearbeitung von Bohrungen kommen diese Merkmale nicht so sehr zum Tragen. Die hier typischen Zerspanungsquerschnitte mit einer Schnittiefe von ungefähr 0,1 - 0,3 mm sind vergleichsweise klein und die dabei entstehenden Zerspankräfte daher gering. Beim Bohren in Vollmaterial (Schruppbearbeitung) dagegen sind die Zerspanungsquerschnitte deutlich größer. So beträgt die Zerspanungsbreite z. B. bei einem Vollbohrer mit einem Durchmesser von 20 mm mit zwei radial angeordneten Wendeschneidplatten ca. 5 mm. Aus diesem sehr großen Zerspanungsquerschnitt resultieren entsprechend große Zerspankräfte, die von der Schneide aufgenommen werden müssen. Die dazu notwendige Biegefestigkeit und Bruchzähigkeit ist beim Cermet nicht gegeben.

Durch eine Beschichtung des Cermets wird erreicht, daß ein Teil der mechanischen Belastung von der Beschichtung aufgenommen wird. Dadurch wird die Belastung des Cermet wesentlich reduziert. Aufgrund der geringen Schichtdicke kommen jedoch die Vorteile des Cermet weiterhin zum Tragen. Da Cermet im Vergleich zum Hartmetall ein thermischer Isolator ist, verbleibt ein größerer Teil der entstehenden Zerspanungswärme im abfließenden Span. Die Schneide wird also weniger warm. In Verbindung mit der höheren Warmhärte des Cermets können so deutlich höhere Zerspanungstemperaturen realisiert werden, dies ist gleichbedeutend mit höheren Bearbeitungsgeschwindigkeiten.

Vorteilhafterweise ist für die Beschichtung der Schneide eine Schichtdicke von weniger als 50 µm Dicke vorgesehen. Ist das Bohrwerkzeug mit mindestens zwei räumlich getrennten Aufnahmen zur Aufnahme der Schneideinrichtung versehen, so kann auch eine Mischbestückung vorgenommen werden. Das heißt, daß nur ein Teil der Schneide aus einem beschichteten Cermet-Schneidstoff besteht.

Bei einer vorteilhaften Ausgestaltung der Erfindung ist vorgesehen, daß die Beschichtung eine Hartstoffschicht ist, die zumindest Titan und Stickstoff als Komponenten aufweist. Des weiteren können die Beschichtungen Komponenten enthalten, wie beispielsweise Chrom, Bor oder Zirkonium und Stickstoff, z. B. Chromnitrid oder Zirkoniumnitrid.

Nach einer weiteren vorteilhaften Ausgestaltung der Erfindung ist vorgesehen, daß die Cermetschneidplatte vor dem Beschichten an ihrer Freifläche mechanisch bearbeitet wird, z. B. durch Schleifen und/oder Strahlen, und an ihrer Spanfläche entweder unbearbeitet bleibt oder mechanisch bearbeitet wird, z. B. durch Bürsten und/oder Strahlen. Durch die mechanisch bearbeitete Freifläche und Spanfläche lassen sich die Reibungsvorgänge und dadurch die Wärmeentwicklung bei der Zerspanung reduzieren und damit die möglichen Bearbeitungsdaten erhöhen. Zusätzlich können mit der mechanischen Bearbeitung eventuelle Fehlstellen in der Oberfläche, wie z. B. Risse, verbliebene Sinterreststoffe und relativ lose anhaffende Partikel entfernt werden.

Alternativ kann ebenso vorgesehen sein, daß die durch die Sintertechnik hergestellte Cermetschneidplatte vor dem Beschichten derart präzise ausgebildet ist, daß eine Beschichtung der Cermetschneidplatte auch ohne mechanische Vorbehandlung der Freifläche, z. B. durch Schleifen, vorgenommen werden kann. Auch hier ist eine mechanische Vorbehandlung der Spanfläche möglich.

Durch die mechanische Bearbeitung der Freifläche und der Spanfläche kann eine Steigerung der Standfestigkeit der Cermetschneidplatte erreicht werden, weil sich durch die geglättete Oberfläche ein besserer Schichtverbund und damit eine bessere Schichthaftung einstellt. Die Güte der geglätteten Oberflächen kann durch die Einsatzdaten des jeweils eingesetzten Verfahrens, beispielsweise Schleifmittel, Schleifgeschwindigkeit, Zustellung, Vorschub oder Glättungsdauer, Glättungsgeschwindigkeit und Glättungsmaterial vorteilhaft eingestellt werden.

Des weiteren ist vorteilhafterweise vorgesehen, daß die beschichtete Cermetschneidplatte mechanisch nachbehandelt wird, z. B. durch Bürsten, Strahlen oder Polieren. Durch diese Nachbehandlung kann die Oberflächenqualität der beschichteten Frei- und Spanfläche nochmals verbessert und so die Schnittdaten bei der Zerspanung weiter erhöht werden.

Nach einer weiteren vorteilhaften Ausgestaltung der Erfindung können die Schichten sowohl als Monolayerschicht, als Multilayerschicht als auch als Mehrlagenbeschichtung ausgeführt sein.

Nach einer weiteren vorteilhaften Ausgestaltung der Erfindung ist vorgesehen, daß die Beschichtungen sowohl im CVD- als auch im PVD-Verfahren und deren Varianten auf dem Cermet-Schneidwerkstoff abgeschieden werden können.

Bei einer weiteren vorteilhaften Ausführungsform der Erfindung ist vorgesehen, daß die unbeschichtete Cermetschneidplatte zur besseren Schichthaftung thermisch und/oder chemisch vorbehandelt ist und/oder daß die beschichtete Cermetschneidplatte thermisch und/oder chemisch nachbehandelt wird. Darüber hinaus kann die Cermetschneidplatte bezüglich ihrer Oberfläche nach der Beschichtung auch mechanisch nachbehandelt sein, z. B. durch Bürsten und Polieren.

Vorteilhafterweise kann des weiteren die Schneidkante der Cermetschneidplatte, die durch die Spanfläche und durch die Freifläche gebildet wird, mit einem Radius kleiner ca. 50 µm versehen sein (z. B. durch Bürsten), wobei die Genauigkeit des Radius durch das verwendete Verfahren vorgegeben wird. Durch diese Kantenverrundung wird eine Erhöhung der Schneidkantenstabilität erreicht.

## Patentansprüche

1. Bohrwerkzeug für Bohrungen in Vollmaterial mit einem Bohrerschaft mit mindestens einer an der Stirnseite des Bohrwerkzeuges angeordneten Schneide, mit mindestens einer von der Stirnseite sich in axialer Richtung erstreckender Ausnehmung für die Spanabfuhr aus der Bohrung, dadurch gekennzeichnet, daß mindestens eine der Schneiden aus einem beschichteten Cermet-Schneidwerkstoff ausgebildet ist.

2. Bohrwerkzeug nach Anspruch 1, dadurch gekennzeichnet, daß die Beschichtung mindestens die Komponenten Titan und Stickstoff enthält.

3. Bohrwerkzeug nach Anspruch 1, dadurch gekennzeichnet, daß die Beschichtung mindestens die Komponenten Zirkonium, Bor oder Chrom und Stickstoff enthält.

4. Bohrwerkzeug nach einem der vorhergehenden Ansprüche, dadurch gekennzeichnet, daß die Schneide eine gesinterte Schneidplatte ist, bei der die Freifläche vor oder nach dem Beschichten unbearbeitet oder bearbeitet und die Spanfläche vor oder nach dem Beschichten unbearbeitet oder bearbeitet ist.

5. Bohrwerkzeug nach einem der vorhergehenden Ansprüche, dadurch gekennzeichnet, daß die Beschichtung eine Harstoffschicht ist und vorzugsweise eine Schichtdicke von weniger als 50 µm aufweist.

6. Bohrwerkzeug nach einem der vorhergehenden Ansprüche, dadurch gekennzeichnet, daß die Beschichtung als Monolayer-, Multilayer- oder Mehrlagenschicht ausgebildet ist.

7. Bohrwerkzeug nach einem der vorhergehenden Ansprüche, dadurch gekennzeichnet, daß die Schneide zwischen Freifläche und Spanfläche mit einem Radius kleiner 50 µm ausgebildet ist.

8. Bohrwerkzeug nach einem der vorhergehenden Ansprüche, dadurch gekennzeichnet, daß die Beschichtung eine im CVD-Verfahren oder im PVD-Verfahren oder deren Varianten hergestellte Beschichtung ist.

9. Verwendung von Schneiden aus einem beschichteten Cermet-Schneidwerkstoff nach einem der vorhergehenden Ansprüche für ein Bohrwerkzeug zur Herstellung von Bohrungen in Vollmaterial.
